(19) Europäisches Patentamt
European Patent Office
Office européen des brevets

(11) **EP 3 210 289 B1**

(12) **FASCICULE DE BREVET EUROPEEN**

(45) Date de publication et mention de la délivrance du brevet:
**05.09.2018 Bulletin 2018/36**

(21) Numéro de dépôt: **15804868.6**

(22) Date de dépôt: **12.10.2015**

(51) Int Cl.:
*H02M 1/32* *(2007.01)*    *H02J 7/02* *(2016.01)*

(86) Numéro de dépôt international:
**PCT/FR2015/052741**

(87) Numéro de publication internationale:
**WO 2016/062940 (28.04.2016 Gazette 2016/17)**

(54) **DISPOSITIF ET PROCÉDÉ DE CHARGE D'UNE BATTERIE À PARTIR D'UN RÉSEAU TRIPHASE, AYANT UN MODE CHARGE DÉGRADÉ**

VORRICHTUNG UND VERFAHREN ZUM AUFLADEN EINER BATTERIE AUS EINEM DREHSTROMNETZ MIT EINEM DEGRADIERTEN LADEMODUS

DEVICE AND METHOD FOR CHARGING A BATTERY FROM A THREE-PHASE NETWORK, HAVING A DEGRADED CHARGING MODE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.10.2014 FR 1460243**

(43) Date de publication de la demande:
**30.08.2017 Bulletin 2017/35**

(73) Titulaire: **Renault S.A.S.**
**92100 Boulogne-Billancourt (FR)**

(72) Inventeurs:
• KVIESKA, Pedro
78000 Versailles (FR)
• MERIENNE, Ludovic
91190 Gif sur Yvette (FR)

(56) Documents cités:
**FR-A1- 2 949 909       FR-A1- 2 974 253**
**US-A1- 2014 035 492**

## Description

La présente invention concerne un dispositif de charge d'une batterie haute tension, notamment d'une batterie de traction d'un véhicule automobile, à partir d'un réseau d'alimentation triphasé.

Dans des systèmes de recharge de batterie à haute tension, la puissance électrique du réseau est amenée à la batterie successivement au travers de deux convertisseurs : un abaisseur de tension (« buck ») et un élévateur de tension (« boost »). Ces deux convertisseurs permettent respectivement d'abaisser et d'élever le rapport de tension entre leur borne de sortie et leur borne d'entrée, en ouvrant et en fermant successivement une série d'interrupteurs, à une fréquence qui est commandée en fonction du courant de sortie, et/ou de la tension de sortie souhaitée.

De tels systèmes de recharge sont par exemple décrits dans la demande de brevet FR 2 943 188, qui porte sur un système de recharge embarqué pour véhicule automobile, permettant un rechargement à partir d'un circuit triphasé ou monophasé d'une batterie du véhicule. Le circuit de recharge intègre les bobines d'une machine électrique qui assure par ailleurs d'autres fonctions comme la génération de courant ou la propulsion du véhicule.

On pourra également se référer au document FR 2 974 253 qui décrit un dispositif de régulation du circuit abaisseur de tension et du circuit élévateur de tension d'un dispositif de recharge et qui permet, malgré la présence d'un filtre RLC en entrée du dispositif, de conserver un déphasage réduit entre le courant et la tension prélevés sur un réseau d'alimentation monophasé.

Par ailleurs, lorsqu'un chargeur de batterie est utilisé dans des conditions climatiques relativement chaudes, sa température est susceptible de s'élever au-delà d'une valeur admissible de sorte que des coupures de charge sont provoquées pour permettre un refroidissement du dispositif.

Divers composants peuvent être à l'origine d'une telle coupure. Notamment, le microcontrôleur de l'unité de régulation des circuits abaisseur et élévateur de tension a tendance à beaucoup s'échauffer.

Une telle coupure est maintenue jusqu'à ce que la température repasse en-dessous d'un seuil prédéterminé, puis la charge est relancée. Ce processus se répète si la température remonte, ce qui est généralement le cas lorsque les conditions climatiques ne changent pas. La charge complète peut dès lors s'avérer très longue.

Le document CN 203415961 décrit à cet égard un chargeur de batterie dans lequel des coupures sont prévues en cas d'élévation de la température de composants internes du chargeur au-delà d'une valeur de seuil.

Il est également connu, des documents US 2007069690 et US 2014084859, d'adapter la puissance du chargeur en fonction des contraintes thermiques qui lui sont appliquées.

Il a été constaté que les stratégies de coupure de charge mises en oeuvre dans l'état de la technique ne peuvent être appliquées lorsque le chargeur assure la charge de la batterie à partir d'un réseau triphasé.

En effet, une stratégie qui consiste à réduire la puissance de charge pour que la température diminue et à couper la charge lorsque la puissance atteint zéro est inadaptée lorsque le chargeur est raccordé à un réseau triphasé. Il a en effet été constaté que l'échauffement du microcontrôleur (CPU) est proportionnel à son taux d'utilisation, de sorte que sa température dépend principalement de sa charge CPU, c'est-à-dire de la puissance de calcul qu'il met en oeuvre. Ainsi, limiter la charge de la batterie ne permet pas d'abaisser la température du microcontrôleur si sa puissance de calcul n'est pas réduite.

Lorsque la température du microcontrôleur dépasse la valeur de seuil, le seul moyen de faire diminuer sa température est d'arrêter son fonctionnement.

Au vu de ce qui précède, l'invention se propose d'éviter les coupures de charge et d'optimiser le temps de recharge d'une batterie, notamment dans des conditions climatiques défavorables, en mettant en oeuvre un mode de charge dégradé lorsque la température de l'unité de régulation augmente.

L'invention a donc pour objet, selon un premier aspect, un dispositif de charge d'une batterie, notamment d'une batterie de véhicule automobile à traction électrique, à partir d'un réseau d'alimentation triphasé, ce dispositif comprenant un étage de filtrage destiné à être raccordé au réseau triphasé, un étage abaisseur de tension raccordé à l'étage de filtrage, un étage élévateur de tension destiné à être raccordé à la batterie et couplé à l'étage abaisseur de tension via un composant inductif, et au moins une unité de régulation adaptée pour imposer des rapports cycliques de hachage à l'étage abaisseur de tension et à l'étage élévateur de tension.

Ce dispositif comporte en outre des moyens pour comparer la température de fonctionnement de l'unité de régulation à une première valeur de seuil et des moyens pour commander la charge à partir de deux phases seulement du réseau triphasé lorsque la température de fonctionnement de l'unité de régulation dépasse la valeur de seuil.

Ainsi, le mode de fonctionnement dégradé consiste à effectuer la charge à partir du réseau d'alimentation triphasé, mais en utilisant un mode dégradé analogue à une charge réalisée à partir d'un réseau monophasé, à partir de seulement deux phases du réseau triphasé, ce qui nécessite un taux d'utilisation moindre du microcontrôleur de l'unité de régulation.

Dans un mode de réalisation, le dispositif comporte des moyens pour commander la charge à partir des trois phases du réseau triphasé lorsque la température de l'unité de régulation est supérieure à une deuxième valeur de seuil inférieure à la première valeur de seuil.

L'unité de régulation comporte en outre de préférence des moyens pour répartir le courant transitant dans l'étage abaisseur entre deux branches dudit étage abaisseur en fonction du rapport cyclique de hachage imposé à cet étage.

Dans ce cas, l'unité de régulation comporte des moyens pour mettre en oeuvre une régulation de l'étage abaisseur qui utilise un seul interrupteur piloté sur une branche de passage de courant.

Selon une autre caractéristique du dispositif de charge, l'unité de régulation comporte des moyens pour imposer des rapports cycliques de hachage à l'étage élévateur de tension et des moyens pour compenser l'élévation de la tension de sortie de l'étage abaisseur de tension, résultant de la charge à partir des deux phases du réseau.

L'invention a également pour objet, selon un deuxième aspect, un procédé de charge d'une batterie, notamment d'une batterie de traction d'un véhicule automobile à traction électrique, à partir d'un réseau d'alimentation triphasé, dans lequel on filtre la tension d'entrée fournie par le réseau, on amène la puissance électrique du réseau à la batterie par l'intermédiaire d'un étage abaisseur de tension et d'un étage élévateur de tension couplés par l'intermédiaire d'un composant inductif, et dans lequel on compare la température de fonctionnement d'une unité de régulation de l'étage abaisseur et élévateur de tension avec une première valeur de seuil et l'on charge la batterie à partir de deux phases seulement du réseau triphasé lorsque la température dépasse ladite première valeur de seuil.

Dans un mode de mise en oeuvre, on commande la charge de la batterie à partir des trois phases du réseau lorsque la température repasse en dessous d'une deuxième valeur de seuil inférieure à la première valeur de seuil.

Avantageusement, on calcule un rapport cyclique de hachage pour l'étage abaisseur de tension et pour l'étage élévateur de tension, et l'on répartit le courant transitant à travers l'étage abaisseur de tension entre deux branches dudit étage abaisseur en fonction du rapport cyclique de hachage imposé à l'étage abaisseur.

Avantageusement, si la tension de la phase connectée à une première branche desdites deux phases est supérieure à la tension de la phase connectée à une deuxième branche desdites deux phases, on ferme un interrupteur en série avec une diode de la deuxième branche et l'on applique le rapport cyclique de hachage à la première branche et, si tel n'est pas le cas , on ferme un interrupteur en série avec une diode de la première branche et l'on applique le rapport cyclique de hachage à la deuxième branche.

De même, on maintient avantageusement ouvert une troisième branche de l'étage abaisseur de tension pendant la charge à partir desdites deux phases du réseau d'alimentation.

D'autres buts, caractéristiques et avantages de l'invention apparaitront à la lecture de la description suivante, donnée uniquement à titre d'exemple non limitatif, et faite en référence aux dessins annexés sur lesquels :

- la figure 1 illustre un dispositif de recharge selon un mode de réalisation de l'invention ;
- la figure 2 représente un organigramme d'un procédé de recharge conforme à l'invention.

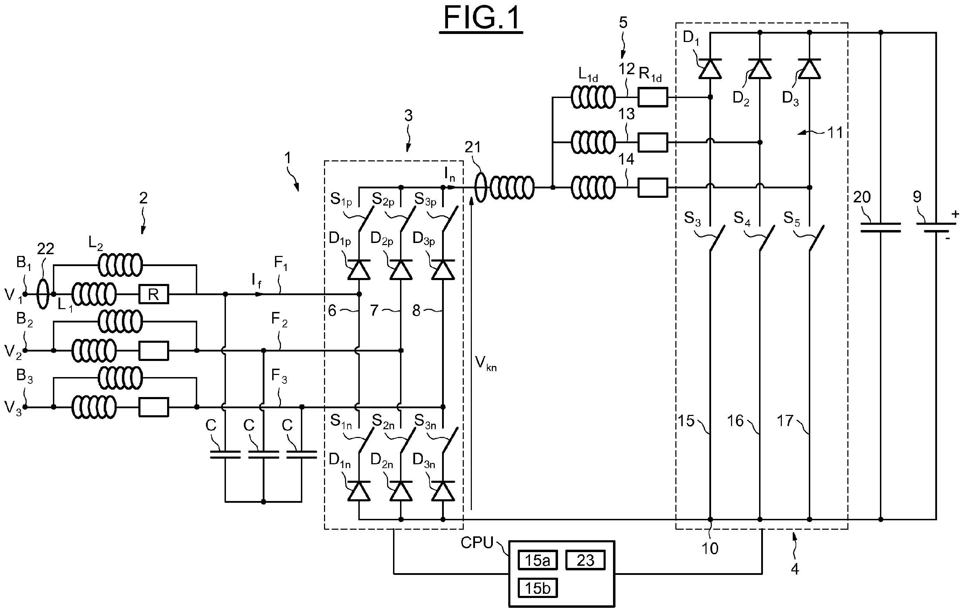

Sur la figure 1, est présenté de manière schématique un dispositif de charge d'une batterie d'un véhicule automobile à traction électrique à partir d'un réseau d'alimentation triphasé, selon un mode de réalisation de l'invention.

Le dispositif de recharge 1 comprend un étage de filtrage 2, un étage redresseur abaisseur de tension 3 couplé à l'étage de filtrage 2, et un étage élévateur de tension 4 couplé à l'étage abaisseur de tension 3 via une machine électrique 5, constitué ici par le moteur électrique de traction du véhicule.

En entrée, le dispositif 1 comprend trois bornes $B_1$, $B_2$, $B_3$ aptes à être couplées au réseau d'alimentation.

Les bornes d'entrée $B_1$, $B_2$ et $B_3$ sont respectivement couplées à trois branches de filtrage de l'étage de filtrage 2. Chaque branche de filtrage comprend deux branches en parallèle, portant l'une une inductance de valeur $L_1$ et une résistance de valeur R en série et l'autre une inductance de valeur $L_2$.

Les trois branches de filtrage sont chacune couplées en sortie à un condensateur de capacité C. L'ensemble des résistances de valeurs R, des inductances de valeurs $L_1$ ou $L_2$, et des condensateurs de capacité C constitue un filtre de type RLC à l'entrée de l'abaisseur de tension 3.

L'abaisseur de tension 3 comprend trois branches parallèles 6, 7 et 8, comportant chacune deux interrupteurs tels que $S_{1p}$ et $S_{1n}$, $S_{2p}$ et $S_{2n}$, et $S_{3p}$ et $S_{3n}$ commandés par une unité de régulation CPU. Chaque branche comporte deux diodes $D_{1p}$ et $D_{1n}$, $D_{2p}$ et $D_{2n}$, et $D_{3p}$ et $D_{3n}$ montées chacune en série avec l'un des deux interrupteurs de la branche.

Chaque entrée de l'abaisseur de tension est connectée, par une branche $F_1$, $F_2$ et $F_3$ à un point de connexion situé entre deux interrupteurs tels que $S_{1p}$ et $S_{1n}$ d'une même branche 6, 7 et 8.

Les deux extrémités communes des branches 6, 7 et 8 constituent deux bornes de sortie de l'abaisseur de tension 3. L'une des bornes est reliée à la borne « - » de la batterie 9 ainsi qu'à une première entrée 10 de l'élévateur de tension 4. L'autre borne est connectée à une première borne de neutre de la machine électrique 5, dont l'autre borne est connectée à une seconde entrée triple 11 de l'élévateur de tension 4.

Comme on le voit, la machine électrique 5 est ici formée par l'association de trois branches 12, 13 et 14 en parallèle comprenant chacune une inductance $L_{1d}$ en série avec une résistance $R_{1d}$.

L'étage élévateur de tension 4 comprend trois branches 15, 16 et 17 en parallèle comprenant chacune un interrupteur $S_3$, $S_4$ et $S_5$ en série avec une diode $D_1$, $D_2$ et $D_3$.

Les trois branches 12, 13 et 14 de la machine électrique sont respectivement raccordées entre l'interrupteur et la diode des trois branches 15, 16 et 17.

Ces trois branches 15, 16 et 17 relient la première entrée 10 de l'élévateur de tension et la borne « + » de la batterie 9.

On voit enfin qu'aux bornes de la batterie 9 est connecté un condensateur 20 destiné à maintenir relativement stable la tension aux bornes de la batterie 9. Un module de suivi de charge de la batterie (non représenté) est également prévu pour délivrer une valeur de consigne traduisant, en fonction du niveau de charge de la batterie, l'intensité optimale du courant à faire rentrer par la borne « + » de la batterie 9. Ce module de suivi de charge est destiné à transmettre la valeur de consigne de courant batterie à l'unité de régulation.

Par ailleurs, des modules de mesure sont prévus dans le dispositif de charge pour transmette à l'unité de régulation des valeurs de courant et de tension mesurées en des points caractéristiques du dispositif de charge. On voit en effet sur la figure 1 que le dispositif est pourvu d'un organe 21 de mesure du courant In traversant la machine électrique, un organe 22 de mesure de la valeur de l'intensité d'un courant filtré If en entrée du filtre RLC, et des organes de mesure ou de calcul des valeurs des tensions d'entrée $V_1$, $V_2$ et $V_3$ d'alimentation du réseau, de la tension Vkn de sortie de l'étage abaisseur 3 et de la tension de la batterie.

Enfin, l'unité de régulation CPU est équipée de moyens 23 de mesure de température. Des moyens de comparaison, par exemple intégrés à l'unité de régulation CPU ou intégrés à un calculateur du véhicule, comparent la température mesurée de l'unité de régulation, et en particulier du microcontrôleur de l'unité de régulation, avec une première valeur de seuil à partir de laquelle la charge est effectuée selon un mode dégradé.

On pourra à cet égard prévoir une première valeur de seuil comprise entre 90 et 100°. Toutefois, d'autres valeurs de seuil peuvent être utilisées en fonction du type de composant utilisé.

Lorsque la température du microcontrôleur du régulateur dépasse la valeur de seuil, l'unité de régulation provoque l'ouverture des interrupteurs de l'une des branches 6, 7 et 8 de l'étage abaisseur de tension 3 de manière à interdire tout passage de courant dans cette branche. Il s'agit en l'espèce d'ouvrir les interrupteurs $S_{2p}$ et $S_{2n}$ de la deuxième branche 7 de manière à adopter une charge analogue à une charge à partir d'un réseau monophasé pour laquelle les besoins en calcul du microcontrôleur sont moindres.

Lorsque l'unité de régulation constate que la température mesurée du microcontrôleur repasse au dessous d'une deuxième valeur de seuil inférieure à la première valeur de seuil, il provoque à nouveau la fermeture des deux interrupteurs $S_{2p}$ et $S_{2n}$ pour revenir à une charge triphasée.

En d'autres termes, on prévoit une hystérésis pour éviter des changements de mode de charge trop fréquents.

De manière classique, l'étage abaisseur de tension 3 se charge de la régulation de la puissance de charge. L'étage élévateur de tension 4 assure, quant à lui, la régulation du courant In issu du premier étage.

La régulation de puissance mise en oeuvre lors du mode de charge dégradé est similaire à celle d'une charge à partir d'un circuit monophasé. Toutefois, le réseau monophasé équivalent utilisé lors de la charge en mode dégradé fournit une tension supérieure. En effet, en triphasé, la tension entre deux phases vaut $220x\sqrt{3}$ soit 380 volts (RMS). Par conséquent, l'étage 15a de régulation de puissance de l'unité de régulation dédié à la régulation de puissance assure une compensation de sa tension $V_{kn}$ de sortie en utilisant une boucle de rétroaction.

L'étage de régulation de puissance de l'unité de régulation calcule par ailleurs un rapport cyclique de hachage des interrupteurs $S_{1p}$, $S_{1n}$, $S_{3p}$ et $S_{3n}$ de l'étage abaisseur 3 afin de répartir le courant dans chacune de ses phases.

Si nous avons un rapport cyclique de 50% du courant circulant depuis le réseau vers la sortie de l'étage abaisseur 3, le courant de la phase neutre valant 100A, nous aurons un courant en entrée de l'étage abaisseur 3 de 50A. Si nous avons un rapport cyclique de 50% du courant circulant vers le réseau d'alimentation depuis l'entrée de l'étage abaisseur 3, le courant de la phase de neutre valant 100A, nous aurons un courant en entrée de l'étage abaisseur 3 de -50A.

On utilise alors, pour des raisons pratiques, dans cette demande par convention des rapports cycliques signés valant entre -1 et 1 fois le courant neutre représentant le courant en entrée de l'étage abaisseur de tension 3. En d'autres termes, si ce rapport cyclique est positif, le courant arrive par la première phase, en l'espèce dans la première branche 6 et repart par la troisième phase, en l'espèce par la troisième branche 8.

Au contraire, si le rapport est négatif, le courant arrive par la troisième phase et repart par la première phase.

L'étage 15b de régulation de l'étage 4 élévateur de tension impose également des rapports cycliques d'ouverture des interrupteurs $S_3$, $S_4$ et $S_5$. Il asservit en particulier la valeur du courant de charge de manière à compenser l'élévation de la tension $V_{kn}$ imposée par les rapports cycliques d'ouverture des interrupteurs des première et troisième branches 6 et 8.

Il est connu qu'une régulation monophasée génère des rapports cycliques qui sont synchronisés avec la tension.

Ainsi, le rapport cyclique issu de la régulation de l'étage 3 abaisseur de tension sera positif si la tension de la première phase est supérieure à la tension de la troisième phase et sera négatif dans le cas contraire.

Pour répartir le courant entre les première et troisième phases, on procède comme suit à partir de la

commande $\alpha$ issue de la régulation :

- on garde les interrupteurs $S_{1n}$ et $S_{3n}$ fermés en permanence et les interrupteurs $S_{2p}$ et $S_{2n}$ ouverts en permanence ;
- on calcule la valeur absolue du rapport cyclique $\alpha$ à partir du rapport entre le courant souhaité et le courant In de neutre ;
- si le rapport cyclique est positif, on applique ce rapport sur l'interrupteur $S_{1p}$ et l'on ferme l'interrupteur $S_{3p}$ en permanence ;
- si le rapport cyclique est négatif, on applique ce rapport sur l'interrupteur $S_{3p}$ et l'on ferme l'interrupteur $S_{1p}$ en permanence.

Ainsi, dans le cas où le rapport cyclique est positif, la tension sur la première phase est supérieure à la tension sur la troisième phase, de sorte que le courant circulera en arrivant par la première phase et en revenant par la troisième phase lorsque l'interrupteur $S_{1p}$ est fermé, et ce, indépendamment de l'état ouvert ou fermé de l'interrupteur $S_{3p}$.

Lorsque l'interrupteur $S_{3p}$ est fermé, la diode $D_{3p}$ de la branche 8 fait office de roue libre lors de l'ouverture de l'interrupteur $S_{1p}$.

Dans le cas où le rapport cyclique est négatif, le même raisonnement s'applique entre les première et troisième phases. La diode $D_{1p}$ fait office de diode roue libre lors de l'ouverture de l'interrupteur $S_{3p}$.

On dispose toujours d'une diode roue libre, dans tous les cas, puisque l'on a en permanence un interrupteur fermé sur au moins l'une des branches de l'étage 3 abaisseur de tension lorsque le rapport cyclique change de signe. Le chemin de passage du courant en roue libre utilise les deux diodes d'une même branche.

On constate que la régulation ne commande réellement qu'un seul interrupteur à chaque pas de calcul, ce qui permet de réduire considérablement la charge de calcul du microcontrôleur et donc de le refroidir sans mettre en oeuvre de coupure de charge. En permanence, cinq interrupteurs sont soit fermés, soit ouverts, sur la totalité d'une période, un seul interrupteur étant réellement commandé.

On atteint en réalité un taux de charge du microcontrôleur inférieur à celui qui est mesuré avec une charge monophasée classique.

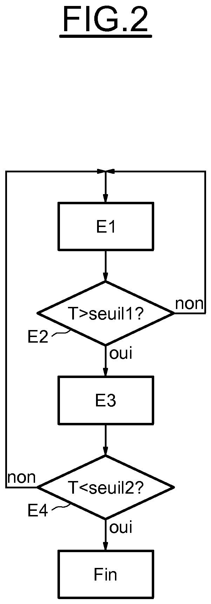

On se référera enfin à la figure 2 qui illustre les principales phases d'un procédé de charge conforme à l'invention.

Comme indiqué précédemment, lors du fonctionnement normal du chargeur, selon lequel la charge s'effectue à partir d'un réseau triphasé, la tension délivrée par le réseau d'alimentation est tout d'abord filtrée puis la puissance issue du réseau est fournie à l'étage 3 redresseur de tension pour être redressée puis à l'étage 4 élévateur de tension, en passant par le moteur électrique du véhicule, assimilable à des résistances en série avec des bobines d'inductance, pour enfin procéder à la charge de la batterie à un courant constant.

Lors d'une première étape E1, on mesure la température de l'unité de régulation CPU, et en particulier la température du microcontrôleur.

Lors de l'étape E2 suivante, on procède à un test pour déterminer si la température T mesurée est supérieure à une première valeur de seuil, *seuil1*.

Si tel n'est pas le cas, le procédé retourne à l'étape E1 précédente.

Si tel est le cas, on met en oeuvre une charge en mode dégradé (étape E3) en répartissant le courant transitant à travers l'étage abaisseur de tension entre les branches des première et troisième phases (étape E3), et ce, en maintenant ouverte la branche 7 pendant toute la phase de charge en mode dégradé.

Lors de l'étape E4 suivante, on effectue un test pour détecter si la température devient inférieure à une deuxième valeur de seuil, *seuil2,* inférieure à la première valeur de seuil.

Si tel est le cas, la procédure de charge en mode dégradé prend fin et l'on commande la charge en mode triphasé, c'est-à-dire à partir des trois phases du réseau.

Si tel n'est pas le cas, le procédé retourne à l'étape E1 précédente.

Il est à noter qu'en variante, le dispositif de charge selon l'invention utilise plusieurs unités de régulation, par exemple une unité de commande de l'étage abaisseur de tension physiquement distincte de l'unité de commande l'étage élévateur de tension. Le principe de l'invention reste inchangé dans cette variante de réalisation de l'invention, celle-ci permettant de limiter momentanément les ressources de calcul nécessaires à la recharge de la batterie de traction.

## Revendications

1. Dispositif de charge d'une batterie, notamment d'une batterie d'un véhicule automobile à traction électrique, à partir d'un réseau d'alimentation triphasé, comprenant un premier étage de filtrage destiné à être raccordé au réseau triphasé, un étage abaisseur de tension (3) raccordé à l'étage de filtrage, un étage élévateur de tension (4) destiné à être raccordé à la batterie et couplé à l'étage abaisseur de tension via un composant inductif, et au moins une unité de régulation (CPU) adaptée pour imposer des rapports cycliques de hachage à l'étage abaisseur de tension (3), **caractérisé en ce qu'**il comporte des moyens pour comparer la température de fonctionnement de l'unité de régulation avec une première valeur de seuil et des moyens pour commander la charge à partir de deux phases seulement du réseau triphasé lorsque la température de fonctionnement de l'unité de régulation dépasse ladite première valeur de seuil.

2. Dispositif selon la revendication 1 comprenant des moyens pour commander la charge à partir des trois phases du réseau triphasé lorsque la température de l'unité de régulation est inférieure à une deuxième valeur de seuil inférieure à la première valeur de seuil.

3. Dispositif selon l'une des revendications 1 ou 2, dans lequel l'unité de régulation comporte des moyens pour répartir le courant transitant dans l'étage abaisseur entre deux branches dudit étage abaisseur de tension (3) en fonction du rapport cyclique de hachage imposé à cet étage.

4. Dispositif selon la revendication 3, dans lequel l'unité de régulation comporte des moyens pour mettre en oeuvre une régulation de l'étage abaisseur qui utilise un seul interrupteur piloté sur une branche de passage de courant

5. Dispositif selon l'une quelconque des revendications 1 à 4, dans lequel l'unité de régulation (CPU) comporte des moyens pour imposer des rapports cycliques de hachage à l'étage élévateur de tension et des moyens pour compenser l'élévation de la tension de sortie de l'étage abaisseur de tension, résultant de la charge à partir des deux phases du réseau.

6. Procédé de charge d'une batterie, notamment d'une batterie de traction d'un véhicule automobile à traction électrique à partir d'un réseau d'alimentation triphasé, dans lequel on filtre la tension d'entrée fournie par le réseau, on amène la puissance électrique du réseau à la batterie via un étage abaisseur de tension (3) et un étage élévateur de tension (4) couplés par l'intermédiaire d'un composant inductif, **caractérisé en ce que** l'on compare la température de fonctionnement d'une unité de régulation (CPU) de l'étage abaisseur avec une première valeur de seuil, et l'on charge la batterie à partir de deux phases seulement du réseau triphasé lorsque la température dépasse ladite première valeur de seuil.

7. Procédé selon la revendication 6, dans lequel on commande la charge de la batterie à partir des trois phases du réseau lorsque la température mesurée est inférieure à une deuxième valeur de seuil inférieure à la première valeur de seuil.

8. Procédé selon l'une des revendications 6 ou 7, dans lequel on calcule un rapport cyclique de hachage pour l'étage abaisseur de tension et pour l'étage élévateur de tension, et l'on répartit le courant transitant à travers l'étage abaisseur de tension entre deux branches dudit étage abaisseur en fonction du rapport cyclique de hachage imposé à l'étage abaisseur.

9. Procédé selon la revendication 8, dans lequel, si la tension de la phase connectée à une première branche desdites deux phases est supérieure à la tension de la phase connectée à une deuxième branche desdites deux phases, on ferme un interrupteur en série avec une diode de la deuxième branche et l'on applique le rapport cyclique de hachage à la première branche et, si tel n'est pas le cas , on ferme un interrupteur en série avec une diode de la première branche et l'on applique le rapport cyclique de hachage à la deuxième branche.

10. Procédé selon la revendication 9, dans lequel on maintient ouvert une troisième branche de l'étage abaisseur de tension pendant la charge à partir desdites deux phases du réseau d'alimentation.

**Patentansprüche**

1. Vorrichtung zum Laden einer Batterie, insbesondere einer Batterie eines Kraftfahrzeugs mit elektrischem Antrieb, ausgehend von einem Dreiphasen-Versorgungsnetz, die eine erste Filterstufe, die dazu bestimmt ist, an das Dreiphasennetz angeschlossen zu werden, eine an die Filterstufe angeschlossene Spannungsabwärtswandlerstufe (3), eine Spannungsaufwärtswandlerstufe (4), die dazu bestimmt ist, an die Batterie angeschlossen und mit der Spannungsabwärtswandlerstufe über ein induktives Bauteil gekoppelt zu werden, und mindestens eine Regelungseinheit (CPU) enthält, die geeignet ist, der Spannungsabwärtswandlerstufe (3) Zerhacker-Tastverhältnisse vorzugeben, **dadurch gekennzeichnet, dass** sie Einrichtungen, um die Betriebstemperatur der Regelungseinheit mit einem ersten Schwellwert zu vergleichen, und Einrichtungen aufweist, um das Laden ausgehend von nur zwei Phasen des Dreiphasennetzes zu steuern, wenn die Betriebstemperatur der Regelungseinheit den ersten Schwellwert überschreitet.

2. Vorrichtung nach Anspruch 1, die Einrichtungen enthält, um das Laden ausgehend von den drei Phasen des Dreiphasennetzes zu steuern, wenn die Temperatur der Regelungseinheit niedriger als ein zweiter Schwellwert niedriger als der erste Schwellwert ist.

3. Vorrichtung nach einem der Ansprüche 1 oder 2, wobei die Regelungseinheit Einrichtungen aufweist, um den durch die Spannungsabwärtswandlerstufe gehenden Strom zwischen zwei Zweigen der Spannungsabwärtswandlerstufe (3) abhängig vom dieser Stufe vorgegebenen Zerhacker-Tastverhältnis zu verteilen.

4. Vorrichtung nach Anspruch 3, wobei die Regelungseinheit Einrichtungen aufweist, um eine Regelung der Abwärtswandlerstufe durchzuführen, die einen einzigen Schalter verwendet, der auf einem Stromdurchgangszweig gesteuert wird.

5. Vorrichtung nach einem der Ansprüche 1 bis 4, wobei die Regelungseinheit (CPU) Einrichtungen, um der Spannungsaufwärtswandlerstufe Zerhacker-Tastverhältnisse vorzugeben, und Einrichtungen aufweist, um die Erhöhung der Ausgangsspannung der Spannungsabwärtswandlerstufe zu kompensieren, die aus dem Laden ausgehend von den zwei Phasen des Netzes resultiert.

6. Verfahren zum Laden einer Batterie, insbesondere einer Traktionsbatterie eines Kraftfahrzeugs mit elektrischem Antrieb, ausgehend von einem Dreiphasen-Versorgungsnetz, wobei die vom Netz gelieferte Eingangsspannung gefiltert wird, die elektrische Leistung vom Netz zur Batterie über eine Spannungsabwärtswandlerstufe (3) und eine Spannungsaufwärtswandlerstufe (4) gebracht wird, die mittels eines induktiven Bauteils gekoppelt sind, **dadurch gekennzeichnet, dass** die Betriebstemperatur einer Regelungseinheit (CPU) der Abwärtswandlerstufe mit einem ersten Schwellwert verglichen wird, und die Batterie ausgehend von nur zwei Phasen des Dreiphasennetzes geladen wird, wenn die Temperatur den ersten Schwellwert überschreitet.

7. Verfahren nach Anspruch 6, wobei das Laden der Batterie ausgehend von den drei Phasen des Netzes gesteuert wird, wenn die gemessene Temperatur niedriger als ein zweiter Schwellwert niedriger als der erste Schwellwert ist.

8. Verfahren nach einem der Ansprüche 6 oder 7, wobei ein Zerhacker-Tastverhältnis für die Spannungsabwärtswandlerstufe und für die Spannungsaufwärtswandlerstufe berechnet wird, und der durch die Spannungsabwärtswandlerstufe gehende Strom zwischen zwei Zweigen der Abwärtswandlerstufe abhängig vom der Abwärtswandlerstufe vorgegebenen Zerhacker-Tastverhältnis verteilt wird.

9. Verfahren nach Anspruch 8, wobei, wenn die Spannung der mit einem ersten Zweig der zwei Phasen verbundenen Phase höher als die Spannung der mit einem zweiten Zweig der zwei Phasen verbundenen Phase ist, ein mit einer Diode des zweiten Zweigs in Reihe geschalteter Schalter geschlossen und das Zerhacker-Tastverhältnis an den ersten Zweig angewendet wird, und wenn dies nicht der Fall ist, ein mit einer Diode des ersten Zweigs in Reihe geschalteter Schalter geschlossen und das Zerhacker-Tastverhältnis an den zweiten Zweig angewendet wird.

10. Verfahren nach Anspruch 9, wobei ein dritter Zweig der Spannungsabwärtswandlerstufe während des Ladens ausgehend von den zwei Phasen des Versorgungsnetzes offen gehalten wird.

## Claims

1. Device for charging a battery, in particular a battery for an electric-drive automotive vehicle, from a three-phase power supply network, comprising a first filtering stage that is intended to be connected to the three-phase network, a voltage buck stage (3) connected to the filtering stage, a voltage boost stage (4) that is intended to be connected to the battery and coupled to the voltage buck stage via an inductive component, and at least one regulating unit (CPU) that is designed to impose chopping duty cycles on the voltage buck stage (3), **characterized in that** it comprises means for comparing the operating temperature of the regulating unit with a first threshold value and means for controlling the charging operation so that it takes place via two phases only of the three-phase network when the operating temperature of the regulating unit exceeds said first threshold value.

2. Device according to Claim 1, comprising means for controlling the charging operation so that it takes place via the three phases of the three-phase network when the temperature of the regulating unit is below a second threshold value that is lower than the first threshold value.

3. Device according to either of Claims 1 and 2, in which the regulating unit includes means for distributing the current flowing through the buck stage between two branches of said voltage buck stage (3) according to the chopping duty cycle imposed on this stage.

4. Device according to Claim 3, in which the regulating unit includes means for implementing a regulation of the buck stage which uses a single switch controlled over one current flow branch.

5. Device according to one of Claims 1 to 4, in which the regulating unit (CPU) includes means for imposing chopping duty cycles on the voltage boost stage and means for compensating for the increase in the output voltage of the voltage buck stage, resulting from charging from the two phases of the network.

6. Method for charging a battery, in particular a drive battery for an electric-drive automotive vehicle, from a three-phase power supply network, in which the input voltage delivered by the network is filtered, the electrical power is transmitted from the network to the battery via a voltage buck stage (3) and a voltage boost stage (4) that are coupled via an inductive component, **characterized in that** the operating temperature of a regulating unit (CPU) for regulating the buck stage is compared with a first threshold value and the battery is charged from two phases only of the three-phase network when the temperature exceeds said first threshold value.

7. Method according to Claim 6, in which the battery-charging operation is controlled so that it takes place via the three phases of the network when the measured temperature is below a second threshold value that is lower than the first threshold value.

8. Method according to either of Claims 6 and 7, in which a chopping duty cycle is calculated for the voltage buck stage and for the voltage boost stage, and the current flowing through the voltage buck stage is distributed between two branches of said buck stage according to the chopping duty cycle imposed on the buck stage.

9. Method according to Claim 8, in which, if the voltage of the phase connected to a first branch of said two phases is higher than the voltage of the phase connected to a second branch of said two phases, a switch in series with a diode of the second branch is closed and the chopping duty cycle is applied to the first branch and, if such is not the case, a switch in series with a diode of the first branch is closed and the chopping duty cycle is applied to the second branch.

10. Method according to Claim 9, in which a third branch of the voltage buck stage is kept open during the operation of charging from said two phases of the power supply network.

FIG.1

# FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2943188
- FR 2974253
- CN 203415961
- US 2007069690 A
- US 2014084859 A